# EUROPÄISCHE PATENTANMELDUNG

(11) **EP 2 556 756 A1**
(43) Veröffentlichungstag der Anmeldung: **13.02.2013**
(21) Anmeldenummer: 11177372.7
(22) Anmeldetag: 12.08.2011
(51) Int. Cl.: A23L 1/314, A23L 1/317, A23L 1/325

(54) **Bratwurst und Verfahren zu seiner Herstellung**

(71) Anmelder: Buck, Ernest, 22397 Hamburg (DE)
(72) Erfinder: Buck, Ernest, 22397 Hamburg (DE)
(74) Vertreter: Glawe, Delfs, Moll

(57) **Zusammenfassung**

Gegenstand der Erfindung ist eine Bratwurst mit einer das Brät umhüllenden Wursthülle und ein Verfahren zu deren Herstellung. Das Brät ist eine Mischung aus Rindbrät und Brät von Meeresfrüchten und/oder Fischen und/oder Krebstieren, wobei der Rindbrätanteil überwiegt und der Gesamtfettgehalt des gemischten Bräts 15-40 Gew.-% beträgt.

## Beschreibung

Die Erfindung betrifft eine Bratwurst sowie ein Verfahren zu deren Herstellung.

Bratwürste und deren Herstellung sind aus offenkundiger Vorbenutzung bekannt und werden entweder aus Fleisch oder Fisch hergestellt. Fischbratwürste mit einer Füllmasse aus Filetstücken von Seelachs, Wels, Seehecht und Rotbarsch sind beispielsweise aus dem deutschen Gebrauchsmuster DE 201 04 242 U1 bekannt. Eine Kombination aus Fisch und Fleisch in einem zum Verzehr geeigneten Bratwursterzeugnis wäre von Vorteil, hat sich jedoch nicht zuletzt aufgrund der unterschiedlichen Struktur und Zusammensetzungen von Fisch und Fleisch, und den damit einhergehenden unterschiedlichen Eigenschaften, wie beispielsweise dem Anbrenn- und Garverhalten bei Braten der Wurst, nicht etabliert. Die Erfindung sucht Wege, dies zu erleichtern. Sie zielt dabei insbesondere auf eine Bratwurst ab, bei der der Geschmack an Fisch oder anderen Meerestieren, beispielsweise Meeresfrüchte oder Krebstiere, über den des Fleischgeschmacks deutlich dominiert, obgleich deren Mengenanteil unter dem des Fleischanteils liegt.

Die Erfindung löst diese Aufgaben durch eine Bratwurst gemäß Anspruch 1 und 15, die erhältlich ist nach einem Verfahren gemäß Anspruch 9 mit den aufeinanderfolgenden Schritten a)- e). Vorteilhafte Ausführungsformen der Erfindung sind in den Unteransprüchen offenbart.

Zunächst seien einige im Rahmen der Erfindung verwendete Begriffe erläutert.

Der Begriff "Bratwurst" bezeichnet jegliche Wurst, die zum Braten bestimmt ist oder gebraten wurde und aus Brät hergestellt ist.

Unter den Begriff "Brät" fällt gehacktes oder gekuttertes Fleisch. Fleisch umfasst alle von Huftieren, Geflügel, Hasentieren und frei lebendem Wild genießbaren Teile (s. beispielsweise EG-Verordnung Nr. 853/2004, Begriffsbestimmungen für "Fleisch" in Anhang I). Unter den Begriff "Brät" fallen ebenfalls die gehackten oder gekutterten Teile von zum Genuss für den Menschen bestimmtem Seafood, umfassend Meeresfrüchte, Fische und Krebstiere. Meeresfrüchte umfassen insbesondere Muscheln, Wasserschnecken, Tintenfische und Kalmare. Fische umfassen wechselwarme und im Wasser lebende Wirbeltiere. Krebstiere bzw. der im Lebensmittelbereich ebenfalls gebräuchliche Begriff "Krustentiere" umfassen Krebse wie Schrimps (Garnelen), Langusten, Krabben (echte Krabben oder Kurzschwanzkrebse), insbesondere Wollhandkrabben, Hummer und Scampi (Kaisergranat).

Das Brät der erfindungsgemäßen Bratwurst besteht zu mehr als der Hälfte, vorzugsweise 60-90 Gew.-%, weiter vorzugsweise 70-80 Gew.-%, besonders bevorzugt 72-78 Gew.-% aus Rindbrät und zu weniger als der Hälfte, vorzugsweise 10-40 Gew.-%, weiter vorzugsweise 20-30 Gew.-%, besonders bevorzugt 22-28 Gew.-% aus Brät von Meeresfrüchten und/oder Fischen und/oder Krebstieren, wobei der Gesamtfettgehalt des gemischten Bräts 15-40 Gew.-%, vorzugsweise 15-30 Gew.-%, weiter vorzugsweise 20-30 Gew.-% und besonders bevorzugt 25 Gew.-% beträgt. Die Erfindung hat erkannt, dass überraschenderweise selbst bei einem gegenüber dem Fleischbrät geringeren Anteil an Brät von Meeresfrüchten und/oder Fischen und/oder Krebstieren dennoch der Geschmack der Meeresfrüchte, Fische oder Krebstiere den Fleischgeschmack dominiert. Von besonderer Relevanz ist dabei die Auswahl von Rindfleisch für die Herstellung des entsprechenden Fleischbrätanteils an der erfindungemäßen Bratwurst, da andere Fleischsorten, beispielsweise Schweinefleisch, den Bratwurstgeschmack dominieren und daher als ungeeignet ausscheiden. Gemäß einer bevorzugten Ausführungsform der Erfindung weist das aus dem Rindfleisch bzw. das daraus hergestellte Rindbrät einen Eigenfettgehalt von 2-24 Gew.-%, vorzugsweise 5-20 Gew.-%, weiter vorzugsweise 10-18 Gew.-% und besonders bevorzugt 15-17 Gew.-% auf. Diese gezielte Vorauswahl der Brätausgangsmaterialien in Kombination mit den weiteren Merkmalen der beanspruchten Erfindung erlaubt es beispielsweise, die erfindungsgemäße Bratwurst als Alternative oder Ergänzung mit entsprechendem Wohlgeschmack zu Delikatessen oder luxuriös geltenden Seafood-Nahrungsmitteln, die bisher aufgrund der entsprechenden Kosten nicht allen Konsumenten zugänglich waren, anzubieten.

Die Erfindung hat des Weiteren erkannt, dass der anspruchsgemäße Gesamtfettgehalt eine wesentliche Voraussetzung dafür ist, dass bei der Zubereitung der Bratwurst, wie sie bei herkömmlichen reinen Fleischbrätbratwürsten angewendet wird, ein Anbrennen bzw. Verkohlen der Bratwurst mit der damit einhergehenden Schadstoffbildung vermieden werden kann. Die überraschende Erkenntnis, dass der Gesamtfettgehalt innerhalb der in den unabhängigen Ansprüchen beanspruchten Grenzen liegen muss, damit der Geschmack an Fisch oder anderen Meerestieren über den des Fleischgeschmacks deutlich dominiert, obgleich deren Mengenanteil unter dem des Fleischanteils liegt, erklärt sich die Anmelderin damit, dass das Fett als (Fisch- bzw. Meerestier)Geschmacksträger dient, da es offenbar besonders gut die lipophilen Fischaromastoffe zur Geltung bringt. Der anspruchsgemäße Gesamtfettgehalt des gemischten Bräts ergibt sich aus dem durch das Rindfleisch und dem durch die Meeresfrüchte, Fische und Krebstiere vorgegebenen Eigenfettanteil, der gegebenenfalls durch Hinzufügung von Fetten auf den gewünschten Gesamtfettanteil des Mischbräts angehoben werden kann. Besonders geeignet sind dafür natürliche Tier-, besonders bevorzugt Rind- und/oder Fischfette. Fette pflanzlichen Ursprungs sind weniger geeignet, da sie die Neigung zum Anbrennen und Verkohlen der erfindungsgemäßen Bratwurst erhöhen und eine entsprechend aufwendigere Überwachung beim Braten erfordern.

Hergestellt wird das Brät für die erfindungsgemäße Bratwurst durch Verwolfen von Rindfleisch und Seafood (Meeresfrüchte, Fischen und Krebstieren) mit dem Fleischwolf oder industriell mit dem Kutter, wobei insbesondere bei der Verwendung eines Kutters eine Kühlung bevorzugt wird. Die Kühlung kann entweder extern, beispielsweise über die äußere Kühlung des Kutterbehälters oder durch unmittelbare Zugabe eines Kühlmittels, beispielsweise von Wasser (meist als Eis) erfolgen. Die Erfindung hat erkannt, dass es von besonderem Vorteil ist, die beiden Komponenten Rindfleisch und Seafood gemeinsam zu Kuttern oder zu Wolfen, bevor anschließend bei Bedarf der Gesamtfettgehalt des Gemischtbräts durch Bei- oder Untermischung von Fetten auf den gewünschten Gesamtfettgehalt eingestellt wird. Durch das gemeinsame Kuttern oder Wolfen ist eine weitestgehend homogene Mischung des Rindfleischbräts mit dem Seafood-Brät sicher gestellt und "Geschmacksinseln" aufgrund nicht ausreichender Durchmischung des Bräts können vermieden werden.

Vor dem sich sich im Herstellungsverfahren anschließenden Abfüllen des Bräts in die dafür vorgesehene Wursthülle können dem Brät bei Bedarf Zusatzstoffe hinzugegeben werden, wobei Stoffe natürlichen Ursprungs vorzuziehen sind. Bei den Zusatzstoffen handelt es sich um die in der Nahrungsmittelindustrie üblicherweise verwendeten Geschmacks- und Gewürzstoffe, Farbstoffe, Vitamine, Mineralstoffe und Dickungsmittel.

Der Begriff "Wursthülle" bezeichnet jede Hülle, die das Brät der Bratwurst umgibt und ihr seine Form verleiht. Gemäß einer bevorzugten Ausführungsform der Erfindung ist die Wursthülle eine von Tieren durch die Bearbeitung von Därmen (Saitling), Blasen, Mägen und Häuten gewonnene natürliche Wursthülle, die vorzugsweise von Ziegen gewonnen wurde. Die Erfindung hat überraschenderweise erkannt, dass insbesondere Ziegendarm keinen den Fischgeschmack des Bräts beeinträchtigenden Eigen-(Ziegen-)geschmack aufweist, wie er beispielsweise bei Schweinedarm selbst nach mehrmaliger Waschung vorhanden ist.

Gemäß einer bevorzugten Ausführungsform der Erfindung erfolgt die Verarbeitung des Wurstbräts, und insbesondere das Abfüllen, bei einer Temperatur von 18-35°C, weiter vorzugsweise 20-35°C, weiter vorzugsweise 22-27°C, besonders bevorzugt bei 24-26°C.

Gemäß einer bevorzugten Ausführungsform der Erfindung ist die das Brät aufnehmende Wursthülle so dimensioniert, dass die erfindungemäße Bratwurst einen Durchmesser von 0,5-2,5 cm, vorzugsweise 0,7-2,0 cm und besonders bevorzugt 0,8-1,5 cm aufweist. Diese Dimensionierung, die sich an den Durchmesser von Wiener bzw. Frankfurter Würstchen anlehnt, erlaubt eine optimale verzehrgerechte Zubereitung der Bratwürste in angemessener Zeit, vorzugsweise innerhalb von 2-15 Minuten, die mit dem Durchmesser des Bratguts, seiner Zusammensetzung, Struktur und Konsistenz korreliert. Die Länge der erfindungsgemäßen Bratwürste kann über die für Bratwürste übliche maximale Länge von 25 cm hinausgehen und beispielsweise bis zu 60 cm betragen. Die Wursthülle kann vor oder nach der Abfüllung des gemischten Bräts auf der Wursthülle, vorzugsweise auf der vom Brät abgewandten Seite, eine durch Branding, vorzugsweise Laser-Branding, und/oder Beschriftung und/oder Stempelung aufgebrachte Markierung aufweisen, beispielsweise ein Logo, eine Marke, eine Produktbezeichnung oder Herstellerangabe. Bei dem besonders vorteilhaften Laser-Branding wird die oberste Schicht bis zu einer Tiefe von wenigen Nanometern verbrannt, so dass die Wursthülle nicht perforiert wird. Die Laser-Branding-Markierung setzt sich besonders deutlich von der durch die Wursthülle durchscheinenden hellen Brätfüllung ab, die durch den Fisch-, als auch Fettanteil begründet ist.

Nachfolgend wird die Erfindung anhand von Beispielen näher erläutert.

### Beispiel 1

Grob entsehntes Muskelfleisch mit einem Eigenfettanteil von 16 Gew.-% wurde in 50-100 Gramm Stücke geschnitten und im Verhältnis von 3:1 mit fangfrischem Seafood (Fischfilet bzw. die verzehrbaren Teile von Meeresfrüchten und Krebstieren) vom selben oder vorherigen Tag, in den Aufnahmetrichter eines Füllwolfs gegeben.

Das am Ausgangsstutzen des Füllwolfs austretende Brät wurde in die sich von der Darmbremse durch den Fülldruck abziehende Naturdarmhülle abgefüllt, wobei als Darm Ziegen- und Schweinedarm verwendet wurde. Die erhaltenen Bratwürste hatten einen Durchmesser von etwa 1,5 cm.

Als Seafood wurden die zum Verzehr üblicherweise verwendeten Teile der folgenden Seafood-Produkte zu jeweiligen Bratwürsten verarbeitet: Hummer, Languste, Wollhandkrabben, Scampi, Garnelen, Schleie, Flussbarsche, Hechte, Aland, Brachse, Güster, Zobel, Zope, Frauennerfling, Perlfisch, Zährte, Döbel, Rapfen, Barbe, Mairenke, Schneider, Sichling, Elritze, Rotauge, Rotfeder, Karausche, Giebel, Moderlieschen, Hasel, Gründling, Bitterling und Ukelei, Thunfisch, Zander, Karpfen, Seeteufel, Aal, Meeräsche, Dorsch, Steinbutt, Heilbutt, Scholle, Hering, Makrele, Forelle, Lachs und Wolfsbarsch.

### Beispiel 2

Kontrollbratwürstchen wurden wie in Beispiel 1, jedoch nur aus Seafood-Brät, d.h. ohne einen entsprechenden Rindfleischanteil, hergestellt.

### Beispiel 3

Die Bratwürste gemäß den Beispielen 1 und 2 wurden auf einem Gasgrill unter gleichen Bedingungen gegrillt, wobei bei den Kontrollbratwürsten gemäß Beispiel 2 trotz permanenten Wendens eine gleichmäßige Bräunung ohne Anbrennungen nicht zu erreichen war.

Bei den erfindungsgemäßen Bratwürsten gemäß Beispiel 1 konnte eine besonders gleichmäßige Bräunung bei den folgenden verwendeten Seafood-Produkten der Gruppe A erreicht werden: Hummer, Languste, Wollhandkrabben, Scampi, Garnelen, Thunfisch, Zander, Karpfen, Seeteufel, Aal, Meeräsche, Dorsch, Steinbutt, Heilbutt, Scholle, Hering, Makrele, Forelle, Lachs und Wolfsbarsch, wobei der Fettanteil bei den Krebstieren mit Ausnahme der Wollhandkrabbe durch Zugabe von Fischfett auf jeweils 25 Gew.-% Gesamtfettgehalt angehoben wurde.

Eine vom gleichmäßigen Bräunungsgrad zwischen den Bratwürten der vorgenannten Gruppe A und denen gemäß Beispiel 2 (Kontrolle) liegende Bräunung war bei den nachfolgenden Seafood-Produkten der Gruppe B gegeben: Schleie, Flussbarsche, Hechte, Aland, Brachse, Güster, Zobel, Zope, Frauennerfling, Perlfisch, Zährte, Döbel, Rapfen, Barbe, Mairenke, Schneider, Sichling, Elritze, Rotauge, Rotfeder, Karausche, Giebel, Moderlieschen, Hasel, Gründling, Bitterling und Ukelei.

Bei der sensorischen Prüfung dominierte die Intensität des Fischgeschmacks bei den Bratwürsten der Gruppe A über die der Gruppe B. Auffällig ist, dass sich in der weniger geeigneten Gruppe B fast ausschließlich Weißfische finden, die sich durch einen geringeren Eigenfettanteil auszeichnen, der gegebenenfalls durch Fischfett angehoben werden kann, um der Gruppe A analoge sensorische Qualitäten bei der Intensität des Fischgeschmacks als auch deren gleichmäßige Bräunungsqualität zu erreichen.

Des Weiteren konnte sowohl in der Gruppe A als auch in der Gruppe B bei den Bratwürstchen mit Schweinedarm ein den Fischgeschmack leicht beeinträchtigender Restgeschmack des Schweinedarms geschmeckt werden, was bei den offensichtlich geschmacksneutralen Ziegendarmbratwürstchen nicht der Fall war. Des Weiteren neigten die Schweinedarmbratwürstchen zu einer schnelleren Anbrennung bei kontrollierter Überziehung des Zubereitungsintervalls auf dem Grill.

### Beispiel 4

Die Bespiele 1-3 wurden mit Schweinefleischbrät mit einem Eigenfettanteil von 29 Gew.-% dupliziert. Schweinfleisch erwies sich als ungeeignet, da es zum einen keine gleichmäßige Bräunung zuließ und es vermehrt zu Anbrennungen kam und zum anderen den Geschmack der Bratwürste dominierte und der Fischgeschmack kaum noch herauszuschmecken war.

## Patentansprüche

1. Bratwurst mit einer das Brät umhüllenden Wursthülle, **dadurch gekennzeichnet, dass**
a) das Brät
- zu mehr als der Hälfte, vorzugsweise 60-90 Gew.-%, weiter vorzugsweise 70-80 Gew.-%, besonders bevorzugt 72-78 Gew.-% aus Rindbrät und
- zu weniger als der Hälfte, vorzugsweise 10-40 Gew.-%, weiter vorzugsweise 20-30 Gew.-%, besonders bevorzugt 22-28 Gew.-% aus Brät von Meeresfrüchten und/oder Fischen und/oder Krebstieren besteht und
b) der Gesamtfettgehalt des gemischten Bräts 15-40 Gew.-%, vorzugsweise 15-30 Gew.-%, weiter vorzugsweise 20-30 Gew.-% beträgt.

2. Bratwurst nach Anspruch 1, **dadurch gekennzeichnet, dass**,
a) die Meeresfrüchte ausgewählt sind aus der Gruppe bestehend aus Muscheln, Wasserschnecken, Tintenfischen, und Kalmaren,
b) die Fische
- keine Schleie, Barsche mit Ausnahme des Wolfsbarsch, Hechte sowie Weißfische, insbesondere ausgewählt aus der Gruppe bestehend aus Aland, Brachse (Brasse, Blei), Güster, Zobel, Zope, Frauennerfling, Perlfisch, Zährte, Döbel, Rapfen, Barbe, Mairenke, Schneider, Sichling, Elritze, Rotauge (Plötze), Rotfeder, Karausche, Giebel, Moderlieschen, Hasel, Gründling, Bitterling und Ukelei sind, sondern vorzugsweise
- ausgewählt sind aus der Gruppe bestehend aus Thunfisch, Zander, Karpfen, Seeteufel, Aal, Asche, insbesondere Meeräsche, Dorsch, Kabeljau, Steinbutt, Heilbutt, Scholle, Hering, Makrele, Forelle, Lachs und Wolfsbarsch, und
c) die Krebstiere ausgewählt sind aus der Gruppe bestehend aus Hummer, Languste, Krabben (echte Krabben oder Kurzschwanzkrebse), insbesondere Wollhandkrabben, Scampi (Kaisergranat) und Schrimps (Garnelen).

3. Bratwurst nach einem der vorangehenden Ansprüche, **dadurch gekennzeichnet, dass** die Wursthülle eine von Tieren durch die Bearbeitung von Därmen (Saitling), Blasen, Mägen und Häuten gewonnene natürliche Wursthülle ist, wobei die Tiere vorzugsweise Ziegen sind.

4. Bratwurst nach einem der vorangehenden Ansprüche, **dadurch gekennzeichnet, dass** das Rindbrät einen Eigenfettgehalt von 2-24 Gew.-%, vorzugsweise 5-20 Gew.-%, weiter vorzugsweise 10-18 Gew.-%, besonders bevorzugt 15-17 Gew.-% aufweist.

5. Bratwurst nach einem der vorangehenden Ansprüche, **dadurch gekennzeichnet, dass** unter das Mischbrät Fette nicht pflanzlichen Ursprungs, vorzugsweise natürliches Tier-, besonders bevorzugt Rind-, und/oder Fischfett gemischt wird um den Gesamtfettgehalt gemäß Anspruch 1 einzustellen.

6. Bratwurst nach einem der vorangehenden Ansprüche, **dadurch gekennzeichnet, dass** dem Brät Stoffe, vorzugsweise Stoffe natürlichen Ursprungs, ausgewählt aus der Gruppe bestehen aus Geschmacks- und Gewürzstoffe, Farbstoffe, Vitamine, Mineralstoffe und Dickungsmittel hinzugefügt sind.

7. Bratwurst nach einem der vorangehenden Ansprüche, **dadurch gekennzeichnet, dass** die Wurst einen Durchmesser von 0,5-2,5 cm, vorzugsweise 0,7-2,0 cm, weiter vorzugsweise 0,8-1,5 cm aufweist.

8. Bratwurst nach einem der vorangehenden Ansprüche, **dadurch gekennzeichnet, dass** die Bratwurst auf der Wursthülle mit mindestens einem Branding, vorzugsweise einem Laser-Branding, und/oder Beschriftung und/oder einer Stempelung versehen ist.

9. Verfahren zur Herstellung einer Bratwurst mit einer das Brät umhüllenden Wursthülle, wobei das Verfahren die folgenden Schritte umfasst:
a) Bereitstellung von Rindfleisch, vorzugsweise Muskelfleisch, und Meeresfrüchten und/oder Fischen und/oder Krebstieren zu Herstellung eines Bräts, welches
zu mehr als der Hälfte, vorzugsweise 60-90 Gew.-%, weiter vorzugsweise 70-80 Gew.-%, besonders bevorzugt 72-78 Gew.-% aus Rindbrät und zu weniger als der Hälfte, vorzugsweise 10-40 Gew.-%, weiter vorzugsweise 20-30 Gew.-%, besonders bevorzugt 22-28 Gew.-% aus Brät von Meeresfrüchten und/oder Fischen und/oder Krebstieren besteht;
b) Kuttern oder Wolfen, vorzugsweise gemeinsames Kuttern oder Wolfen, des Rindfleischs und der Meeresfrüchte und/oder Fische und/oder Krebstiere;
c) Optionales Aufstocken des Gesamtfettgehalts des Gemischtbräts auf 15-40 Gew.-%, vorzugsweise 15-30 Gew.-%, weiter vorzugsweise 20-30 Gew.-%;
d) Abfüllen des gemischten Bräts in eine Wursthülle, die so dimensioniert ist, dass die Bratwurst vorzugsweise einen Durchmesser von 0,5-2,5 cm, vorzugsweise 0,7-2,0cm, weiter vorzugsweise 0,8-1,5cm aufweist, wobei das Abfüllen vorzugsweise bei einer Temperatur von 18-35°C, weiter vorzugsweise 20-35°C, weiter vorzugsweise 22-27°C, besonders bevorzugt bei 24-26°C erfolgt;
e) Optionales Branding, vorzugsweise Laser-Branding, und/oder Beschriftung und/oder Stempelung der Außenseite der Wursthülle.

10. Verfahren nach Anspruch 9, **dadurch gekennzeichnet, dass**,
a) die Meeresfrüchte ausgewählt sind aus der Gruppe bestehend aus Muscheln, Wasserschnecken, Tintenfischen, und Kalmaren,
b) die Fische
- keine Schleie, Barsche mit Ausnahme des Wolfsbarsch, Hechte sowie Weißfische, insbesondere ausgewählt aus der Gruppe bestehend aus Aland, Brachse (Brasse, Blei), Güster, Zobel, Zope, Frauennerfling, Perlfisch, Zährte, Döbel, Rapfen, Barbe, Mairenke, Schneider, Sichling, Elritze, Rotauge (Plötze), Rotfeder, Karausche, Giebel, Moderlieschen, Hasel, Gründling, Bitterling und Ukelei sind, sondern vorzugsweise
- ausgewählt sind aus der Gruppe bestehend aus:
Thunfisch, Zander, Karpfen, Seeteufel, Aal, Äsche, insbesondere Meeräsche, Dorsch, Kabeljau, Steinbutt, Heilbutt, Scholle, Hering, Makrele, Forelle, Lachs und Wolfsbarsch, und
c) die Krebstiere ausgewählt sind aus der Gruppe bestehend aus Hummer, Languste, Krabben (echte Krabben oder Kurzschwanzkrebse), insbesondere Wollhandkrabben, Scampi (Kaisergranat) und Schrimps (Garnelen).

11. Verfahren nach Anspruch 9 oder 10, **dadurch gekennzeichnet, dass** die Wursthülle eine von Tieren durch die Bearbeitung von Därmen (Saitling), Blasen, Mägen und Häuten gewonnene natürliche Wursthülle ist, wobei die Tiere vorzugsweise Ziegen sind.

12. Verfahren nach einem der Ansprüche 9-11, **dadurch gekennzeichnet, dass** das Rindfleisch einen Eigenfettgehalt von 2-24 Gew.-%, vorzugsweise 5-20 Gew.-%, weiter vorzugsweise 10-18 Gew.-%, besonders bevorzugt 15-17% Gew.-% aufweist.

13. Verfahren nach einem der Ansprüche 9-12, **dadurch gekennzeichnet, dass** im Schritt c) Fette nicht pflanzlichen Ursprungs, vorzugsweise natürliches Tier-, besonders bevorzugt Rind-, und/oder Fischfett verwendet wird.

14. Verfahren nach einem der Ansprüche 9-13, **dadurch gekennzeichnet, dass** vor dem Schritt d) dem Brät Stoffe, vorzugsweise Stoffe natürlichen Ursprungs, ausgewählt aus der Gruppe bestehend aus Geschmacks- und Gewürzstoffen, Farbstoffen, Vitaminen, Mineralstoffen und Dickungsmitteln hinzugefügt werden.

15. Bratwurst erhältlich nach einem der Verfahren gemäß den Ansprüchen 9-14.
